(19) Europäisches Patentamt
European Patent Office
Office européen des brevets

(11) **EP 2 569 358 B1**

(12) **EUROPEAN PATENT SPECIFICATION**

(45) Date of publication and mention
of the grant of the patent:
**30.10.2013 Bulletin 2013/44**

(21) Application number: **11717292.4**

(22) Date of filing: **06.05.2011**

(51) Int Cl.:
*C08K 5/098* (2006.01)   *H01G 4/33* (2006.01)

(86) International application number:
**PCT/EP2011/057322**

(87) International publication number:
**WO 2011/141380 (17.11.2011 Gazette 2011/46)**

(54) **POLYPROPYLENE WITH SPECIFIC CALCIUM STEARATE CONTENT FOR SPECIAL CAPACITORS**

POLYPROPYLEN MIT SPEZIFISCHEM CALCIUMSTEARAT-GEHALT FÜR SPEZIELLE KONDENSATOREN

POLYPROPYLÈNE AYANT UNE TENEUR SPÉCIFIQUE EN STÉARATE DE CALCIUM POUR DES CONDENSATEURS SPÉCIAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.05.2010 EP 10162729**

(43) Date of publication of application:
**20.03.2013 Bulletin 2013/12**

(73) Proprietor: **Borealis AG**
**1220 Vienna (AT)**

(72) Inventor: **JACOBS, Franciscus**
**B-9940 Evergem (BE)**

(74) Representative: **Lux, Berthold**
**Maiwald Patentanwalts GmbH**
**Elisenhof**
**Elisenstraße 3**
**80335 München (DE)**

(56) References cited:
**EP-A1- 1 894 715     EP-A2- 0 318 779**
**WO-A2-00/63013     WO-A2-2008/006532**

**Description**

The present invention is directed to a new capacitor film based on biaxially oriented polypropylene (BOPP).

Polypropylene is the material of choice in the field of film capacitors as its chain lacks any kind of polar groups which orient under electrical field stress. As a result, polypropylene intrinsically possesses a low loss factor and high volume resistivity. These properties, combined with a relatively high dielectric constant and self healing character in the capacitor, make polypropylene so valuable in this technical field. The dielectric strength or the breakdown voltage of polypropylene can be further increased in case it is biaxially oriented which is obtained by stretching a heated sheet of film in two opposing directions, longitudinal and transverse machine directions, inducing a more perfect crystalline formation and orientation. It is also known that additives must be added to polypropylene to make the material durable. For instance antioxidants are added to reduce the risk of degradation of the polymeric material. Further the polypropylene typically contains considerable amounts of polar residues, like chlorine, aluminium, magnesium or silicon originating from the used catalyst. These residues are unwanted as they negatively influence the dielectric properties. Thus also acid scavengers are added in spite the fact that polar elements cause some extra, unfortunate dissipation in the capacitor film. Of course such additives are added in lowest possible amounts, normally not exceeding 100 ppm. A well accepted amount in this technical field is around 75 ppm of acid scavengers.

However, a typical problem during the preparation of biaxially oriented polypropylene (BOPP) is the die drool caused by sheer stress. Further nowadays the winded biaxially oriented polypropylene (BOPP) is subsequently flattened in order to reduce the volume of the capacitor by pressing the round cylinder in an oval shape. The flattening of the circular winding enables to increase the energy density of the capacitor further. The problem of this specific capacitor design is, that the additional flattening step causes also mechanical stress and damage from which the biaxially oriented polypropylene (BOPP) suffers and the inner windings start wrinkling and rippling from the inside to the outside.

Accordingly the object of the present invention is to provide a capacitor film which can be produced from polypropylene not getting damaged during the stretching phase and which can be winded and subsequently flattened without causing defects within the film. Further the ash content of the used polypropylene shall still in acceptable limits and shall not considerably increase the dissipation.

The finding of the present invention is that the used polypropylene must comprise an alkali earth fatty acid salt in amount exceeding 100 ppm.

Accordingly the present invention is directed to a capacitor film comprising

(a) more than 90 wt.-% of a biaxially oriented polypropylene (BOPP) and
(b) more than 100 to below or equal 400 ppm of an alkali earth fatty acid salt.

As usual 1 ppm of additive or residues, e.g. ash content, corresponds to 1 mg additive or residues, e.g. ash content, in 1 kg composition.

Preferably the biaxially oriented polypropylene (BOPP) is the only polymer within the capacitor film. Accordingly the capacitor film may contain further additives apart from the alkali earth fatty acid salt but preferably no other polymer. Thus the remaining part up to 100.0 wt.-% may be accomplished by further additives known in the art. However this remaining part shall be not more than 5.0 wt.-%, preferably not more than 2.0 wt.-%, like not more than 1.0 wt.%, within the capacitor film. Accordingly the capacitor film preferably comprises more than 95 wt.-%, more preferably more 98 wt.-%, like more than 99.0 wt.-%, of the biaxially oriented polypropylene (BOPP). Accordingly in one preferred embodiment the capacitor film is a biaxially oriented polypropylene (BOPP), said biaxially oriented polypropylene (BOPP) comprises more than 100 to below or equal 400 ppm of an alkali earth fatty acid salt.

It has been surprisingly found out that the capacitor film of the instant invention can be produced from polypropylene without getting damaged during the processing steps and without increasing the ash content beyond unacceptable levels or increasing the dissipation.

In the following the instant invention is described in more detail.

Typically the capacitor film has a thickness of not more than 10.0 $\mu$m, preferably not more than 5.0 $\mu$m, more preferably not more than 3.0 $\mu$m, yet more preferably in the range of 0.5 to 3.5 $\mu$m, like in the range of 1.0 to 3.0 $\mu$m.

Further the capacitor film and/or the biaxially oriented polypropylene (BOPP) is/are featured by its/their high purity. Accordingly it is preferred that the capacitor film and/or the biaxially oriented polypropylene (BOPP) has/have an ash content of equal or below 100 ppm, more preferably equal or below 50 ppm, yet more preferably equal or below 40 ppm, still yet more preferably equal or below 30 ppm.

According to an embodiment of the present invention, this high purity is not accomplished by a washing step.

As stated above the polypropylene of the capacitor film is biaxially oriented. Preferably the biaxially oriented polypropylene (BOPP) has a draw ratio in machine direction of at least 4.0 and a draw ratio in transverse direction of at least 4.0. Such ratios are appreciated as commercial biaxially oriented polypropylene films must be stretchable at least to the above defined extent without breaking. The length of the sample increases during stretching in longitudinal direction and the draw ratio in longitudinal direction calculates from the ratio of current length over original sample length. Subsequently, the sample is stretched in transverse direction where the width of the sample is increasing. Hence, the draw ratio calculates from the current width of the sample over the original width of the sample. Preferably the draw ratio in machine direction of the biaxially oriented polypropylene (BOPP) ranges from 4.0 to 8.0, more preferably from 4.5 to 6.5. The draw ratio in transverse direction of the biaxially polypropylene (BOPP) ranges preferably from 6.0 to 10.0, more preferably from 7.0 to 9.5. In a preferred embodiment the biaxially polypropylene (BOPP) has a draw ratio in machine direction from 4.5 to 7.0. in particular from 4.5 to 5.0, and a draw ratio in transverse direction from 6.0 to 10.0, in particular from 8.0 to 10.

The polypropylene which is transferred into a biaxially oriented polypropylene (BOPP) can be any polypropylene, however it is preferred that it is a random propylene copolymer or a propylene homopolymer, the latter is especially preferred. Accordingly wherever in the present application it is referred to properties of the biaxially oriented polypropylene (BOPP) automatically also the properties of the polypropylene used for the preparation of the biaxially oriented polypropylene (BOPP) are defined as well therewith.

According to an embodiment of the present invention the biaxially oriented polypropylene (BOPP) is a biaxially oriented random propylene copolymer. The term random is understood according to IUPAC (Glossary of basic terms in polymer science; IUPAC recommendations 1996). Accordingly it is preferred that the biaxially oriented random propylene copolymer has a randomness of at least 40 %, more preferably of at least 50 %, yet more preferably at least 55 %, even more preferably of at least 60 %, and still more preferably of at least 65 %.

In case the biaxially oriented polypropylene (BOPP) is a biaxially oriented random propylene copolymer it comprises monomers copolymerizable with propylene, for example comonomers such as ethylene and/or $C_4$ to $C_{12}$ alpha-olefins, in particular ethylene and/or $C_4$ to $C_{10}$ alpha-olefins, e.g. 1-butene and/or 1-hexene. Preferably the biaxially oriented random propylene copolymer comprises, especially consists of, monomers copolymerizable with propylene from the group consisting of ethylene, 1-butene and 1-hexene. More specifically the biaxially oriented random propylene copolymer comprises- apart from propylene- units derivable from ethylene and/or 1-butene. In a preferred embodiment the biaxially oriented random propylene copolymer comprises units derivable from ethylene and propylene only. The comonomer content in the biaxially oriented random propylene copolymer is preferably relatively low, i.e. up to 6.0 wt.-%, more preferably 0.5 to 6.0 wt.-%, still more preferably 0.5 to 4.0 wt.-%, yet more preferably 0.5 to 2.0 wt.-%.

The expression biaxially oriented homopolymer used in the instant invention relates to a biaxially oriented polypropylene (BOPP) that consists substantially, i.e. of at least 99.5 wt.-%, more preferably of at least 99.8 wt.-%, of propylene units. In a preferred embodiment only propylene units in the biaxially oriented propylene homopolymer are detectable. The comonomer content can be determined with FT infrared spectroscopy, as described below in the examples.

As stated above it is in particular appreciated that the biaxially oriented polypropylene (BOPP) is a biaxially oriented propylene homopolymer.

Preferably the polypropylene is isotactic. Accordingly it is appreciated that the polypropylene has a rather high pentad concentration, i.e. higher than 90 %, more preferably higher than 92 %, still more preferably higher than 93 % and yet more preferably higher than 95 %, like at least 97 %.

A further characteristic of the biaxially oriented polypropylene (BOPP) is the low amount of misinsertions of propylene within the polymer chain. Accordingly the biaxially oriented polypropylene (BOPP) is preferably featured by low amount of <2, 1> erythro regiodefects, i.e. of not more than 0.4 mol.-%, more preferably of not more than 0.2 mol.-%, like of not more than 0.1 mol.-%, determined by $^{13}$C-NMR spectroscopy.

The capacitor film and/or the biaxially oriented polypropylene (BOPP) can have a xylene cold soluble content (XCS) in a broad range, i.e. up to 6.0 wt.-%. Accordingly the capacitor film and/or the biaxially oriented polypropylene (BOPP) may have a xylene cold soluble content (XCS) in the range of 0.3 to 6.0 wt.-%, like 0.5 to 5.5 wt.-%.

However in preferred embodiments the capacitor film and/or the biaxially oriented polypropylene (BOPP) has/ have a xylene cold soluble (XCS) content in the range of 0.5 to 4.0 wt.-%, more preferably in the range of 0.5 to 3.0 wt.-%, still more preferably of 0.5 to 2.0 wt.-%.

The amount of xylene cold soluble (XCS) additionally indicates that the capacitor film and/or the biaxially oriented polypropylene (BOPP) is/are preferably free of any elastomeric polymer component, like an ethylene propylene rubber. In other words the capacitor film and/or the biaxially oriented polypropylene (BOPP) shall be not a heterophasic polypropylene, i.e. a system consisting of a polypropylene matrix in which an elastomeric phase is dispersed. Such systems are featured by a rather high xylene cold soluble content.

A further aspect of the instant invention is that the capacitor film and/or the biaxially oriented polypropylene (BOPP) has/have a rather high melting point. Accordingly it is appreciated that the capacitor film and/or the biaxially oriented polypropylene (BOPP) according to this invention has a melting temperature ($T_m$) measured according to ISO 11357-3 of at least 145.0 °C, more preferably of at least 155.0 °C, yet more preferably of at least 158 °C. Thus it is in particular appreciated that the melting temperature ($T_m$) measured according to ISO 11357-3 of the capacitor film and/or of the biaxially oriented polypropylene (BOPP) is in the range of 145 to 168 °C, more preferably in the range of 155 to 164 °C, still more preferably in the range of 160 to 164 °C.

Additionally it is appreciated that the capacitor film and/or the biaxially oriented polypropylene (BOPP) has/have a rather high crystallization temperature ($T_c$). Thus it is preferred that the capacitor film and/or the biaxially oriented polypropylene (BOPP) has/have crystallization temperature ($T_c$) measured according to ISO 11357-3 of at least 110 °C, more preferably of at least 111 °C. Accordingly the capacitor film and/or the biaxially oriented polypropylene (BOPP) has/have preferably a crystallization temperature ($T_c$) measured according to ISO 11357-3 in the range of 110 to 120 °C, more preferably in the range of 111 to 117 °C.

The molecular weight distribution (MWD) is the relation between the numbers of molecules in a polymer and the individual chain length. The molecular weight distribution (MWD) is expressed as the ratio of weight average molecular weight ($M_w$) and number average molecular weight ($M_n$). The number average molecular weight ($M_n$) is an average molecular weight of a polymer expressed as the first moment of a plot of the number of molecules in each molecular weight range against the molecular weight. In effect, this is the total molecular weight of all molecules divided by the number of molecules. In turn, the weight average molecular weight ($M_w$) is the first moment of a plot of the weight of polymer in each molecular weight range against molecular weight.

The number average molecular weight ($M_n$) and the weight average molecular weight ($M_w$) as well as the molecular weight distribution (MWD) are determined by size exclusion chromatography (SEC) using Waters Alliance GPCV 2000 instrument with online viscometer. The oven temperature is 140 °C. Trichlorobenzene is used as a solvent (ISO 16014).

Accordingly it is preferred that the biaxially oriented polypropylene (BOPP) has a weight average molecular weight ($M_w$) from 100, 000 to 600, 000 g/mol, more preferably from 200, 000 to 500, 000 g/mol.

A broad molecular weight distribution (MWD) improves the processability of the polypropylene. Accordingly it is appreciated that the molecular weight distribution (MWD) measured according to ISO 16014 is at least 2.8, more preferably at least 3.0, like at least 3.3. On the other hand a rather broad molecular weight distribution (MWD) indicates rather high amount of low molecular weight fractions which contribute to the xylene soluble content without improving the dielectrical performance. Therefore, in an alternative embodiment the molecular weight distribution (MWD) is preferably between 2.8 to 10.0, still more preferably in the range of 3.0 to 8.0.

Furthermore, it is preferred that the biaxially oriented polypropylene (BOPP) has a melt flow rate (MFR) given in a specific range. The melt flow rate measured under a load of 2.16 kg at 230 °C (ISO 1133) is denoted as $MFR_2$ (230 °C). Accordingly, it is preferred that the biaxially oriented polypropylene (BOPP) has an $MFR_2$ (230 °C) of more than 0.5 g/10min, more preferably of more than 1.0 g/10min. Accordingly it is appreciated that the $MFR_2$ (230 °C) measured according to ISO 1133 is in the range of 0.5 to 10.0 g/10min, more preferably in the range of 1.0 to 6.0 g/10min, still more preferably in the range of 1.5 to 4.0 g/10min.

Further it is appreciated that the biaxially oriented polypropylene (BOPP) is of linear structure and thus does not show (or nearly does not show) a kind of branching. Accordingly it is appreciated that the biaxially oriented polypropylene (BOPP) of the instant invention has preferably a branching index g' of not less than 0.9, preferably more than 0.9, like at least 0.95. In other words if the biaxially oriented polypropylene (BOPP) has some kind of branching it shall be rather moderate. Accordingly the branching index g' of the biaxially oriented polypropylene (BOPP) is preferably in the range of 0.9 to 1.0, more preferably in the range of more than 0.9 to 1.0, like in the range of 0.96 to 1.0. In an especially preferred embodiment the biaxially oriented polypropylene (BOPP) shows no branching, i.e. the biaxially oriented polypropylene (BOPP) has a branching index g' of 1.0. The branching index g' is defined as $g' = [IV]_{br}/ [IV]_{lin}$ in which g' is the branching index, $[IV]_{br}$ is the intrinsic viscosity of the branched polypropylene and $[IV]_{lin}$ is the intrinsic viscosity of the linear polypropylene having the same weight average molecular weight (within a range of $\pm$ 3%) as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17, 1301 (1949). This document is herewith included by reference.

As the biaxially oriented polypropylene (BOPP) according to this invention is preferably of non-branched structure it does also not show a significant amount of gel content. Gels are a typical phenomenon of polypropylenes being crosslinked. Thus the gel content is a good indicator for the chemical modification of the polypropylene. Accordingly the biaxially oriented polypropylene (BOPP) is featured by relatively moderate gel content, i.e. of not more than 0.50 wt.-%, more preferably of not more than 0.25 wt.-%, still more preferably of not more than 0.15 wt.-%, like below 0.15 wt.-%, yet more preferably not more than 0.10 wt.-%, determined as the relative amount of polymer insoluble in boiling xylene (xylene hot insoluble fraction, XHI). In an especially preferred embodiment no gel content is detectable.

As stated above a further essential finding of the present invention is that the capacitor film must comprise in a specific range an alkali earth fatty acid salt. Accordingly one requirement of the present invention is that the alkali earth fatty acid salt is present in the capacitor film in the range of more than 100 ppm to below or equal 400 ppm, i.e in the range of 110 to 400 ppm, still more preferably in the range of 110 ppm to 350 ppm, yet more preferably in the range of 115 to 300 ppm, like in the range of 120 to 230 ppm. A still more preferred upper limit for the amount of alkali earth fatty acid salt is 200 ppm, with 180 ppm being a particularly preferred upper limit.

As stated above the alkali earth fatty acid salt within the capacitor film of the present invention is used in comparatively high amounts, however the amount of alkali earth fatty acid salt preferably shall not exceed values having negative impact on the ash content. Thus it is preferred that the amount of the alkali earth fatty acid salt within the capacitor film does not exceed values which cause an ash content exceeding the upper limits as stated above, i.e. an ash content of not more than 100 ppm, more preferably not more than 50 ppm, yet more preferably not more than 40 ppm, still yet more preferably not more than 30 ppm.

The alkali earth fatty acid salt is preferably an alkali earth salt of a $C_{12}$ to $C_{26}$ fatty acid, more preferably an alkali earth salt of a $C_{14}$ to $C_{24}$ fatty acid, still more preferably an alkali earth salt of a $C_{18}$ to $C_{22}$ fatty acid, like an alkali earth salt of a $C_{18}$ fatty acid. Further it is appreciated that the alkali earth fatty acid salt is an alkali earth salt of a saturated fatty acid, in particular of a saturated fatty acid as defined in this paragraph.

The alkali earth element of the alkali earth fatty acid salt is preferably magnesium or calcium, the latter being especially preferred.

Accordingly in a specific embodiment the alkali earth fatty acid salt is a calcium $C_{14}$ to $C_{24}$ fatty acid salt, like calcium stearate.

As stated above, the capacitor film may comprise additional additives known in the art, like antioxidants. However any additives which negatively influences the electrical breakdown behavior should be avoided.

The biaxially oriented polypropylene (BOPP) can be produced in a known manner. In a first step the polypropylene which is used for the preparation of a biaxially oriented material is preferably prepared by polymerizing, in a slurry reactor, for example a loop reactor, propylene optionally together with at least another $C_2$ to $C_{12}$ α-olefin (comonomers), in the presence of a polymerization catalyst to produce a part of the polypropylene. This part is then transferred to a subsequent gas phase reactor, wherein in the gas phase reactor propylene is reacted optionally together with comonomers as defined above in order to produce a further part in the presence of the reaction product of the first step. This reaction sequence provides a reactor blend of parts (i) (fraction (A)) and (ii) (fraction (B)) constituting a polypropylene. It is of course possible by the present invention that the first reaction is carried out in a gas phase reactor while the second polymerization reaction is carried out in a slurry reactor, for example a loop reactor. It is furthermore also possible to reverse the order of producing parts (i) and (ii), which has been described above in the order of first producing part (i) and then producing part (ii). The above-discussed process, comprising at least two polymerization steps, is advantageous in view of the fact that it provides easily controllable reaction steps enabling the preparation of a desired reactor blend. The polymerization steps may be adjusted, for example by appropriately selecting monomer feed, comonomer feed, hydrogen feed, temperature and pressure in order to suitably adjust the properties of the polymerization products obtained.

Such a process can be carried out using any suitable catalyst for the preparation of the polypropylene. Preferably, the process as discussed above is carried out using a Ziegler-Natta catalyst, in particular a high yield Ziegler-Natta catalyst (so-called fourth and fifth generation type to differentiate from low yield, so called second generation Ziegler-Natta catalysts). A suitable Ziegler-Natta catalyst to be employed in accordance with the present invention comprises a catalyst component, a co-catalyst component and at least one electron donor (internal and/or external electron donor, preferably at least one external donor). Preferably, the catalyst component is a Ti-Mg-based catalyst component and typically the co-catalyst is an Al-alkyl based compound. Suitable catalysts are in particular disclosed in US 5, 234, 879, WO 92/19653, WO 92/19658 and WO 99/33843.

Preferred external donors are the known silane-based donors, such as dicyclopentyl dimethoxy silane or cyclohexyl methyldimethoxy silane.

One embodiment of a process as discussed above is a loop-gas phase process, such as developed by Borealis, known as Borstar® technology, described for example in EP 0 887 379 A1 and WO 92/12182.

With respect to the above-mentioned preferred slurry-gas phase process, the following general information can be provided with respect to the process conditions.

Temperature of from 40 to 110°C, preferably between 60 and 100 °C, in particular between 80 and 90 °C, with a pressure in the range of from 20 to 80 bar, preferably 30 to 60 bar, with the option of adding hydrogen in order to control the molecular weight. The reaction product of the slurry polymerization, which preferably is carried out in a loop reactor, is then transferred to the subsequent gas phase reactor, wherein the temperature preferably is within the range of from 50 to 130 °C, more preferably 80 to 100 °C, at a pressure in the range of from 5 to 50 bar, preferably 15 to 35 bar, again with the option of adding hydrogen in order to control the molecular weight.

The residence time can vary in the reactor zones identified above. In embodiments, the residence time in the slurry reaction, for example the loop reactor, is in the range of from 0.5 to 5 hours, for example 0.5 to 2 hours, while the residence time in the gas phase reactor generally will be from 1 to 8 hours.

The properties of the polypropylene produced with the above-outlined process may be adjusted and controlled with the process conditions as known to the skilled person, for example by one or more of the following process parameters: temperature, hydrogen feed, comonomer feed, propylene feed, catalyst, type and amount of external donor, split between two or more components of a multimodal polymer.

The above process enables very feasible means for obtaining the reactor-made polypropylene.

The biaxially oriented polypropylene (BOPP) and thus the capacitor film can be prepared by conventional drawing processes known in the art. Accordingly the process for the manufacture of a capacitor film, i.e. the biaxially oriented polypropylene (BOPP), according to this invention comprises the use of the polypropylene as defined herein and its forming into a film preferably by the tenter method known in the art.

The tenter method is in particular a method in which the polypropylene as defined herein is melt extruded from a slit die such as a T-die and cooled on a cooling drum obtaining an undrawn sheet. Said sheet is pre-heated for example with a heated metal roll and then drawn in the length direction between a plurality of rolls over which a difference in peripheral speeds is established and then both edges are gripped with grippers and the sheet is drawn in the transverse direction in an oven by means of a tenter resulting in a biaxially drawn film. The temperature of said stretched sheet during the longitudinal drawing is preferably controlled in such a way as to be within the temperature range of the melting point of the polypropylene as defined herein (- 15 or + 5°C). The uniformity of the film thickness on transverse drawing can be evaluated with the method in which a fixed region on the film is masked after drawing in the length direction and measuring the actual drawing factor by measuring the spacing of the said masking after transverse drawing.

Subsequently, the film can treated by corona discharge in air, nitrogen, carbon dioxide gas or any of the mixtures on the surface to be metalized, to improve the adhesive strength to the metal to be deposited, and wound by a winder.

The obtained film can set in a vacuum metalizer, and the film is preferably coated with an oil to form an insulation groove suitable for the purpose concerned, using a gravure coater, etc. Then, the metal suitable for the purpose concerned is deposited to achieve a predetermined layer resistance. Furthermore, as required, metallization is carried out through a combshaped deposition preventive plate to continuously change the resistance value in the  transverse direction of the film. The metalized film is slit, to make two metalized reels as a pair for making a capacitor device. Then, the reels are wound to form a device and the device is formed to be flat by a thermal press, being followed by metal spraying at the ends, attaching of leads, as required impregnation with an insulating oil, and packaging to make a capacitor.

Moreover the present invention is directed to the use of a polypropylene, preferably of a biaxially oriented polypropylene (BOPP), comprising more than 100 ppm to below or equal 400 ppm, more preferably in the range of 110 to 400 ppm, still more preferably in the range of 110 ppm to 350 ppm, yet more preferably in the range of 115 to 300 ppm, like in the range of 120 to 230 ppm, even more preferably 120 to 200 ppm, especially preferably 120 to 180 ppm of an alkali earth fatty acid salt, preferably of an alkali earth fatty acid salt as defined above, for the preparation of a biaxially oriented polypropylene (BOPP) and a capacitor film, respectively. Further the present invention is directed to the use of the capacitor film as defined herein in a capacitor.

In addition, the present invention is directed to a capacitor comprising at least one layer comprising a capacitor film as defined herein. Additionally it is preferred that the capacitor comprises a metal layer, in particular a metal layer obtained by the above described process.

The present invention will now be described in further detail by the following examples.

## EXAMPLES

### A. Measuring methods

The following definitions of terms and determination methods apply for the above general description of the invention as well as to the below examples unless otherwise defined.

### Quantification of isotacticity in polypropylene by $^{13}$C NMR spectroscopy

The isotacticity is determined by quantitative $^{13}$C nuclear magnetic resonance (NMR) spectroscopy after basic assignment as e.g. in: V. Busico and R. Cipullo, Progress in Polymer Science, 2001, 26, 443-533. Experimental parameters are adjusted to ensure  measurement of quantitative spectra for this specific task as e.g. in: S. Berger and S. Braun, 200 and More NMR Experiments: A Practical Course, 2004, Wiley-VCH, Weinheim. Quantities are calculated using simple corrected ratios of the signal integrals of representative sites in a manner known in the art. The isotacticity is determined at the pentad level i.e. mmmm fraction of the pentad distribution.

### <2,1>-propylene insertions (<2,1> erythro regiodefects)

The relative amount of 2, 1-insertions of propylene monomers in the chain is determined by $^{13}$C-NMR spectroscopy and calculated as described in EP 0 629 632 B1.

**Randomness**

In the FTIR measurements, films of 250 -mm thickness were compression moulded at 225 °C and investigated on a Perkin-Elmer System 2000 FTIR instrument. The ethylene peak area (760-700 cm$^{-1}$) was used as a measure of total ethylene content. The absorption band for the structure -P-E-P- (one ethylene unit between propylene units), occurs at 733 cm$^{-1}$. This band characterizes the random ethylene content. For longer ethylene sequences (more than two units), an absorption band occurs at 720 cm$^{-1}$. Generally, a shoulder corresponding to longer ethylene runs is observed for the random copolymers. The calibration for total ethylene content based on the area and random ethylene (PEP) content based on peak height at 733 cm$^{-1}$ was made by $^{13}$CNMR. (Thermochimica Acta, 66 (1990) 53-68).

$$Randomness = random\ ethylene\ (\text{-P-E-P-})\ content\ /\ the\ total\ ethylene\ content\ x\ 100\%.$$

**Mw, Mn, MWD**

Mw/Mn/MWD are measured by Gel Permeation Chromatography (GPC) according to the following method:

The weight average molecular weight (Mw), the number average molecular weight (Mn), and the molecular weight distribution (MWD = Mw/Mn) is measured by a method based on ISO 16014-1:2003 and ISO 16014-4:2003. A Waters Alliance GPCV 2000 instrument, equipped with refractive index detector and online viscosimeter is used with 3 x TSK-gel columns (GMHXL-HT) from TosoHaas and 1, 2, 4-trichlorobenzene (TCB, stabilized with 200 mg/L 2, 6-Di tert butyl-4-methyl-phenol) as solvent at 145 °C and at a constant flow rate of 1 mL/min. 216.5 $\mu$L of sample solution are injected per analysis. The column set is calibrated using relative calibration with 19 narrow MWD polystyrene (PS) standards in the range of 0.5 kg/mol to 11 500 kg/mol and a set of well characterized broad polypropylene standards. All samples are prepared by dissolving 5 to 10 mg of polymer in 10 mL (at 160 °C) of stabilized TCB (same as mobile phase) and keeping for 3 hours with continuous shaking prior sampling in into the GPC instrument.

**Melt Flow Rate (MFR)**

The melt flow rates are measured with a load of 2.16 kg (MFR$_2$) at 230 °C. The melt flow rate is that quantity of polymer in grams which the test apparatus standardised to ISO 1133 extrudes within 10 minutes at a temperature of 230 °C under a load of 2.16 kg.

**Comonomer content**

Comonomer content (wt%) is determined in a known manner based on Fourier transform infrared spectroscopy (FTIR) determination calibrated with C$^{13}$-NMR.

**Xylene cold soluble fraction (XCS wt%)**

The xylene cold soluble fraction (XCS) is determined at 23 °C according to ISO 6427.

**The gel content** is assumed to be identical to the xylene hot insoluble (XHI) fraction, which is determined by extracting 1 g of finely cut polymer sample with 350 ml xylene in a Soxhlet extractor for 48 hours at the boiling temperature. The remaining solid amount is dried at 90°C and weighed for determining the insolubles amount.

**Melting temperature Tm, crystallization temperature Tc, and the degree of crystallinity:** measured with Mettler TA820 differential scanning calorimetry (DSC) on 5-10 mg samples. Both crystallization and melting curves were obtained during 10 °C/min cooling and heating scans between 30 °C and 225 °C. Melting and crystallization temperatures were taken as the peaks of endotherms and exotherms.

**Ash content** Ash content is measured according to ISO 3451-1 standard.

**B. Examples**

In the examples a propylene homopolymer (PP-H) with a MFR$_2$ (230 °C) of 3.3 g/10min, a melting temperature of 163 °C, and a pentad concentration of 97.4 % has been used. No 2, 1-insertions of propylene monomers in the chain were detectable by $^{13}$C-NMR spectroscopy.

**Comparative Example (CE1)**

The propylene homopolymer (PP-H) has been additivated with calcium stearate (CAS-No. 1592-23-0) so that the content of the calcium stearate within the propylene homopolymer (PP-H) was 75 ppm. The resulting composition had an ash content of 15 ppm.

**Comparative Example (CE2)**

The propylene homopolymer (PP-H) has been additivated with calcium stearate (CAS-No. 1592-23-0) so that the content of the calcium stearate within the propylene homopolymer (PP-H) was 600 ppm. The resulting composition had an ash content of 63 ppm.

**Inventive Example (IE)**

The propylene homopolymer (PP-H) has been additivated with calcium stearate (CAS-No. 1592-23-0) so that the content of the calcium stearate within the propylene homopolymer (PP-H) was 150 ppm. The resulting composition had an ash content of 29 ppm.

CE and IE were subjected to the following work flow to create cast films: The materials were extruded and cast onto a chill roll to generate quenched film sheets. Settings used were according to table 1

**Table 1:** Cast Film process parameters

| Extruder | Melt temperature | Chill roll temperature | Cast film thickness |
|---|---|---|---|
| Brabender single screw, 19mm, 1:3 conical screw design, screen pack | 230°C | 90°C | 50 $\mu$m |

The frictional behaviour of cast films based on comparative and inventive examples were measured according to ISO 8295 (1995)

The friction of the cast film (1) based on comparative example (CE1) was more pronounced compared to the cast film (2) prepared from the inventive example (IE). According to experience, this indicates that the inventive example (IE) from which the cast film (2) was made is more suitable for being converted into flattened capacitors compared to the cast film (1).

## Claims

1. Capacitor film comprising

   (a) at least 90 wt.-% of a biaxially oriented polypropylene (BOPP) and
   (b) more than 100 to below or equal 400 ppm of an alkali earth fatty acid salt.

2. Capacitor film according to claim 1, wherein the biaxially oriented polypropylene (BOPP) has a draw ratio in machine direction of at least 4.0 and a draw ration in transverse direction of at least 4.0.

3. Capacitor film according to claim 1 or 2, wherein the biaxially oriented polypropylene (BOPP) is the only polymer component within the capacitor film.

4. Capacitor film according to any one of the preceding claims, wherein the biaxially oriented polypropylene (BOPP) is a propylene homopolymer.

5. Capacitor film according to any one of the preceding claims, wherein the capacitor film and/or the biaxially oriented polypropylene (BOPP) has/have an ash content below 100 ppm.

6. Capacitor film according to any one of the preceding claims, wherein the biaxially oriented polypropylene (BOPP) has

   (a) <2, 1> erythro regiodefects of not more than 0.4 mol.-% determined by $^{13}$C-spectroscopy
   and/or

(b) a branching index g' of at least 0.9.

7.  Capacitor film according to any one of the preceding claims, wherein the biaxially oriented polypropylene (BOPP) has

(a) a molecular weight distribution (MWD) measured according to ISO 16014 of at least 2.8,
and/or
(b) a melt flow rate $MFR_2$ (230 °C) measured according to ISO 1133 in the range of 1.0 to 6.0 g/10min.

8.  Capacitor film according to any one of the preceding claims, wherein the capacitor film and/or the biaxially oriented polypropylene (BOPP) has/have

(a) a melting temperature ($T_m$) measured according to ISO 11357-3 of at least 145.0 °C,
and/or
(b) crystallization temperature ($T_c$) measured according to ISO 11357-3 of at least 113 °C.

9.  Capacitor film according to any one of the preceding claims, wherein the capacitor film and/or the biaxially oriented polypropylene (BOPP) has/have a xylene cold soluble fraction (XCS) of up to 6.0 wt.-%.

10. Capacitor film according to any one of the preceding claims, wherein the amount of alkali earth fatty acid salt within the capacitor film is in the range of 120 to 230 ppm.

11. Capacitor film according to any one of the preceding claims, wherein the alkali earth fatty acid salt is an alkali earth salt of a saturated fatty acid.

12. Capacitor film according to any one of the preceding claims, wherein the alkali earth fatty acid salt is an alkali earth salt of a $C_{12}$ to $C_{26}$ fatty acid.

13. Capacitor film according to any one of the preceding claims, wherein the alkali earth fatty acid salt is calcium stearate.

14. Capacitor comprising a capacitor film according to any one of the preceding claims.

15. Capacitor according to claim 14, wherein the capacitor comprises additionally a metal layer.

16. Use of a polypropylene comprising more than 100 to below or equal 400 ppm of an alkali earth fatty acid salt for the preparation of a biaxially oriented polypropylene (BOPP) and/or a capacitor film.

**Patentansprüche**

1.  Kondensatorfilm, umfassend:

(a) wenigstens 90 Gew.-% eines biaxial orientierten Polypropylens (BOPP) und
(b) mehr als 100 bis unter oder gleich 400 ppm eines Erdalkalifettsäuresalzes.

2.  Kondensatorfilm nach Anspruch 1, bei dem das biaxial orientierte Polypropylen (BOPP) ein Zugverhältnis in Maschinenrichtung von wenigstens 4,0 und ein Zugverhältnis in Querrichtung von wenigstens 4,0 aufweist.

3.  Kondensatorfilm nach Anspruch 1 oder 2, bei dem das biaxial orientierte Polypropylen (BOPP) die einzige Polymerkomponente innerhalb des Kondensatorfilms ist.

4.  Kondensatorfilm nach einem der vorherigen Ansprüche, bei dem das biaxial orientierte Polypropylen (BOPP) ein Propylenhomopolymer ist.

5.  Kondensatorfilm nach einem der vorherigen Ansprüche, bei dem der Kondensatorfilm und/oder das biaxial orientierte Polypropylen (BOPP) einen Aschegehalt unter 100 ppm aufweisen/aufweist.

6.  Kondensatorfilm nach einem der vorherigen Ansprüche, bei dem das biaxial orientierte Polypropylen (BOPP) aufweist:

(a) <2, 1>-Erythro-Regiodefekte von nicht mehr als 0, 4 mol-%, bestimmt durch $^{13}$C-Spektroskopie, und/oder

(b) einen Verzweigungsindex g' von wenigstens 0,9.

**7.** Kondensatorfilm nach einem der vorherigen Ansprüche, bei dem das biaxial orientierte Polypropylen (BOPP) aufweist:

(a) eine gemäß ISO 16014 gemessene Molekulargewichtsverteilung (MWD) von wenigstens 2, 8 und/oder

(b) einen gemäß ISO 1133 gemessenen Schmelzindex im Bereich von 1,0 bis 6,0 g/10min.

**8.** Kondensatorfilm nach einem der vorherigen Ansprüche, bei dem der Kondensatorfilm und/oder das biaxial orientierte Polypropylen (BOPP) aufweisen/aufweist:

(a) eine gemäß ISO 11357-3 gemessene Schmelztemperatur ($T_m$) von wenigstens 145,0 °C und/oder

(b) eine gemäß ISO 11357-3 gemessene Kristallisationstemperatur ($T_c$) von wenigstens 113 °C.

**9.** Kondensatorfilm nach einem der vorherigen Ansprüche, bei dem der Kondensatorfilm und/oder das biaxial orientierte Polypropylen (BOPP) eine Xylol-kaltlösliche Fraktion (XCS) bis zu 6,0 Gew.-% aufweisen/aufweist.

**10.** Kondensatorfilm nach einem der vorherigen Ansprüche, bei dem die Menge an Erdalkalifettsäuresalz innerhalb des Kondensatorfilms im Bereich von 120 bis 230 ppm liegt.

**11.** Kondensatorfilm nach einem der vorherigen Ansprüche, bei dem das Erdalkalifettsäuresalz ein Erdalkalisalz einer gesättigten Fettsäure ist.

**12.** Kondensatorfilm nach einem der vorherigen Ansprüche, bei dem das Erdalkalifettsäuresalz ein Erdalkalisalz einer $C_{12}$- bis $C_{26}$-Fettsäure ist.

**13.** Kondensatorfilm nach einem der vorherigen Ansprüche, bei dem das Erdalkalifettsäuresalz Calciumstearat ist.

**14.** Kondensator, enthaltend einen Kondensatorfilm nach einem der vorherigen Ansprüche.

**15.** Kondensator nach Anspruch 14, bei dem der Kondensator zusätzlich eine Metallschicht enthält.

**16.** Verwendung eines Polypropylens, enthaltend mehr als 100 bis unter oder gleich 400 ppm eines Erdalkalifettsäuresalzes, zur Herstellung eines biaxial orientierten Polypropylens (BOPP) und/oder eines Kondensatorfilms.

**Revendications**

**1.** Film de condensateur comprenant

(a) au moins 90 % en poids d'un polypropylène à orientation biaxiale (BOPP) et
(b) de plus de 100 à 400 ppm ou moins d'un sel d'acide gras alcalino-terreux.

**2.** Film de condensateur selon la revendication 1, dans lequel le polypropylène à orientation biaxiale (BOPP) présente un taux d'étirage dans le sens machine d'au moins 4,0 et un taux d'étirage transversal d'au moins 4,0.

**3.** Film de condensateur selon la revendication 1 ou 2, dans lequel le polypropylène à orientation biaxiale (BOPP) est le seul composant polymère à l'intérieur du film de condensateur.

**4.** Film de condensateur selon l'une quelconque des revendications précédentes, dans lequel le polypropylène à orientation biaxiale (BOPP) est un homopolymère de propylène.

**5.** Film de condensateur selon l'une quelconque des revendications précédentes, dans lequel le film de condensateur et/ou le polypropylène à orientation biaxiale (BOPP) présente(nt) une teneur en cendres inférieure à 100 ppm.

**6.** Film de condensateur selon l'une quelconque des revendications précédentes, dans lequel le polypropylène à orientation biaxiale (BOPP) présente

(a) au plus 0, 4 % en moles de régiodéfauts de configuration érythro <2, 1>, déterminés par spectroscopie $^{13}$C;
(b) un indice de ramification g' d'au moins 0,9.

**7.** Film de condensateur selon l'une quelconque des revendications précédentes, dans lequel le polypropylène à orientation biaxiale (BOPP) présente

(a) une distribution des masses moléculaires (MWD), mesurée conformément à la norme ISO 16014, d'au moins 2,8, et/ou
(b) un indice de fluage MFR$_2$ (230°C), mesuré conformément à la norme ISO 1133, situé dans la plage allant de 1,0 à 6,0 g/10 min.

**8.** Film de condensateur selon l'une quelconque des revendications précédentes, dans lequel le film de condensateur et/ou le polypropylène à orientation biaxiale (BOPP) présente(nt)

(a) un point de fusion (T$_m$), mesuré conformément à la norme ISO 11357-3, d'au moins 145, 0°C, et/ou
(b) un point de cristallisation (T$_c$), mesuré conformément à la norme ISO 11357-3, d'au moins 113°C.

**9.** Film de condensateur selon l'une quelconque des revendications précédentes, dans lequel le film de condensateur et/ou le polypropylène à orientation biaxiale (BOPP) présente(nt) une fraction soluble dans le xylène froid (XCS) allant jusqu'à 6,0 % en poids.

**10.** Film de condensateur selon l'une quelconque des revendications précédentes, dans lequel la quantité de sel d'acide gras alcalino-terreux à l'intérieur du film de condensateur est située dans la plage allant de 120 à 230 ppm.

**11.** Film de condensateur selon l'une quelconque des revendications précédentes, dans lequel le sel d'acide gras alcalino-terreux est un sel alcalino-terreux d'un acide gras saturé.

**12.** Film de condensateur selon l'une quelconque des revendications précédentes, dans lequel le sel d'acide gras alcalino-terreux est un sel alcalino-terreux d'un acide gras en C$_{12}$ à C$_{26}$.

**13.** Film de condensateur selon l'une quelconque des revendications précédentes, dans lequel le sel d'acide gras alcalino-terreux est le stéarate de calcium.

**14.** Condensateur comprenant un film de condensateur selon l'une quelconque des revendications précédentes.

**15.** Condensateur selon la revendication 14, lequel condensateur comprend en outre une couche métallique.

**16.** Utilisation d'un polypropylène comprenant de plus de 100 à 400 ppm ou moins d'un sel d'acide gras alcalino-terreux pour la préparation d'un polypropylène à orientation biaxiale (BOPP) et/ou d'un film de condensateur.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5234879 A
- WO 9219653 A
- WO 9219658 A
- WO 9933843 A
- EP 0887379 A1
- WO 9212182 A
- EP 0629632 B1

**Non-patent literature cited in the description**

- Glossary of basic terms in polymer science. *IUPAC recommendations,* 1996
- **B.H. ZIMM ; W.H. STOCKMEYER.** *J. Chem. Phys.,* 1949, vol. 17, 1301
- **V. BUSICO ; R. CIPULLO.** *Progress in Polymer Science,* 2001, vol. 26, 443-533
- **S. BERGER ; S. BRAUN.** 200 and More NMR Experiments: A Practical Course. Wiley-VCH, 2004
- *Thermochimica Acta,* 1990, vol. 66, 53-68